# EUROPEAN PATENT APPLICATION

(11) **EP 1 362 742 A1**
(43) Date of publication of application: **19.11.2003**
(21) Application number: 03253034.7
(22) Date of filing: 15.05.2003
(51) Int. Cl.: B60R 1/12

(54) **Image pickup apparatus and method of controlling the apparatus**

(30) Priority: 17.05.2002 JP 2002143690
(71) Applicant: Pioneer Corporation, Meguro-ku, Tokyo (JP)
(72) Inventor: Koga, Yuji, c/o Pioneer Corporation, Kawagoe-shi, Saitama (JP)
(74) Representative: Haley, Stephen

(57) **Abstract**

An image of an object outside a vehicle is picked up by a left camera (11) and a right camera (12) under the control of a CPU (71) based on current position information (42) of the vehicle whose position is measured, vehicle state information (44) of slow speed, running, etc., and road information (31) concerning the road where the vehicle is positioned, such as a narrow street, and is supplied through a selector (22) to a display (21), so that the need for the user to perform burdensome work is eliminated and the user can check the circumstances outside the vehicle.

## Description

This invention relates to an image pickup apparatus installed in a vehicle and a control method of the image pickup apparatus.

### 2. Description of the Related Art

A system for picking up an image of the circumstances surrounding a vehicle by a camera installed in the vehicle and displaying the picked-up image on a display placed in the vehicle is developed.

The user feels the inconvenience of manually performing various types of control such as starting and ending image pickup by a camera and the like.

The present invention has been made to solve the above problem.

To achieve the above object, according to one aspect of the invention, there is provided an image pickup apparatus comprising an image pickup section for picking up an image of an object outside a vehicle; a position detector for detecting a vehicle position; an information storage section storing road information concerning roads; and a controller for controlling the image pickup section based on the road information and the vehicle position.

According to another aspect of the invention, there is provided an image pickup apparatus comprising an image pickup section for picking up an image of an object outside a vehicle; a position detector for detecting a vehicle position; a state detector for detecting a vehicle state; an information storage section storing road information concerning roads; and a controller for controlling the image pickup section based on the road information and the vehicle position.

According to another aspect of the invention, there is provided an image pickup apparatus comprising an image pickup for picking up an image of an object outside a vehicle; a position detector for detecting a vehicle position; a state detector for detecting a vehicle state; an information storage section storing road information concerning roads; and a controller for controlling the image pickup based on the road information, the vehicle position, and the vehicle state.

According to another aspect of the invention, there is provided an image pickup apparatus control method comprising a road information acquisition step of acquiring road information concerning a road where a vehicle is positioned; a run state information acquisition step of acquiring state information indicating a run state of the vehicle; and a control step of controlling image pickup means based on the road information and the state information from the steps.

These and other objects and advantages of this invention will become more fully apparent from the following detailed description taken with the accompanying drawings in which:
FIG. 1 is a block diagram to show an embodiment of the invention;
FIG. 2 is a block diagram according to an example of the invention; and
FIG. 3 is a flowchart according to the example of the invention.

Referring now to the accompanying drawings, there is shown a preferred embodiment of the invention.

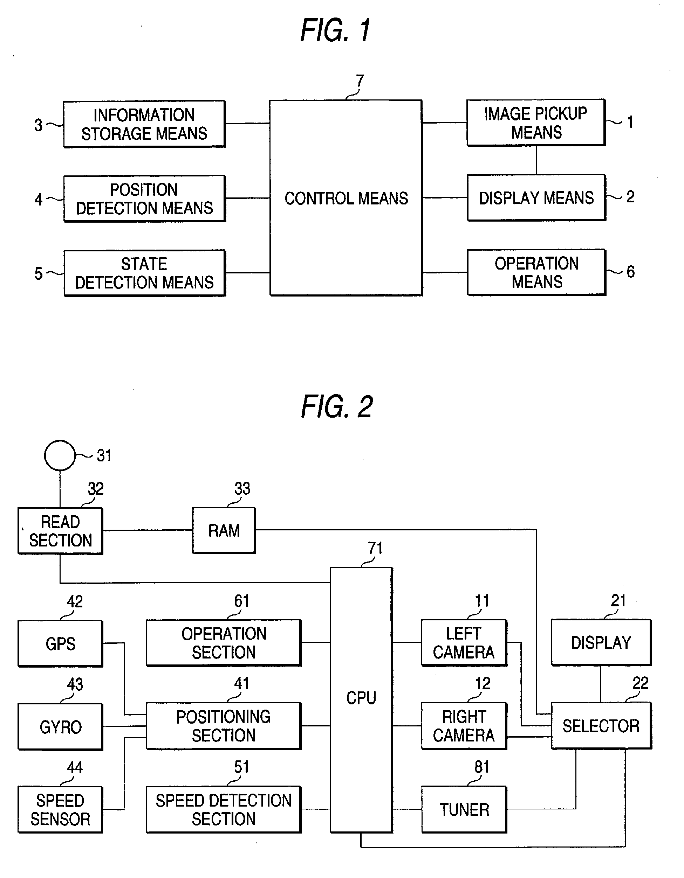

FIG. 1 is a block diagram to show an embodiment of an image pickup apparatus according to the invention. In the figure, numeral 1 denotes image pickup means for picking up an image of the circumstances of the outside of a vehicle as an object, numeral 2 denotes display means for displaying the image picked up by the image pickup means, numeral 3 denotes information storage means storing road information concerning roads, numeral 4 denotes position detection means for detecting the vehicle position, numeral 5 denotes state detection means for detecting the vehicle state, numeral 6 denotes operation means for receiving user's operation, and numeral 7 denotes control means for acquiring information from the means and controlling the operation of the means.

The information storage means 3 stores as the road information concerning roads, known shape information indicating the shapes of the roads defined by link information and node information and known type information indicating the types of roads classified according to the types of roads such as narrow street, prefectural road, and national road in association with the link information.

The control means 7 determines the type of road where the vehicle is positioned at the current point in time from the type information acquired from the information storage means 3 and vehicle position information indicating the current position of the vehicle acquired from the position detection means 4. The control means 7 also determines the vehicle position on the road, for example, the road position of the vehicle on the road such that "the vehicle is positioned XX meters before an intersection" or that "the vehicle is positioned in the intersection" from the shape information acquired from the information storage means 3 and the vehicle position information.

The state detection means 5 detects the vehicle state such as the run state of the traveling speed, the traveling direction, etc., of the vehicle, and generates vehicle state information indicating the run state. The control means 7 can determine the run state of the vehicle based on the vehicle state information.

The operation means 6 comprises an operation section for the user to set image pickup enable (on) or disable (off) of the image pickup means 1 and an operation section to set display on or off of the display means 2 and outputs an operation signal responsive to the actual operation of the user to the control means 7.

According to the described configuration, the control means 7 controls the image pickup means 1 or the display means 2 based on the road information of the road type, etc., and the vehicle position information of the road position, etc., based on the road information and the vehicle state information of the run state, etc., and further based on the road information, the vehicle position information, and the vehicle state information.

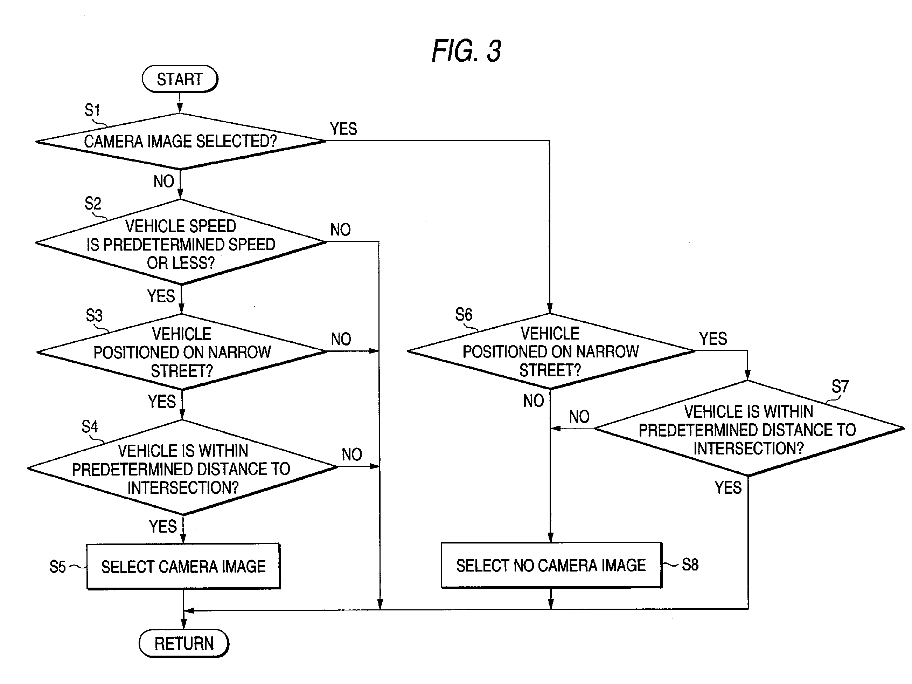

An example according to the embodiment will be discussed in detail with reference to FIGS. 2 and 3.

FIG. 2 is a block diagram to show an example of the image pickup apparatus. In the figure, numerals 11 and 12 denote cameras placed at the front of the vehicle; numeral 11 denotes a left camera for picking up an image of the circumstances at the left front of the vehicle as an object and numeral 12 denotes a right camera for picking up an image of the circumstances at the right front of the vehicle as an object. Various types of operation such as image pickup start and termination, angle, zoom, etc., of each camera are controlled by a CPU 71.

Numeral 21 denotes a display for displaying the image of the circumstances outside the vehicle picked up by each camera, a map image provided by a navigation system, a television image, a text information image received by a tuner, etc. Numeral 22 denotes a selector for selectively supplying one or a plurality of image signals to draw each image to the display 21 and the selection operation is controlled by the CPU 71.

Numeral 31 denotes a ROM disk recording various pieces of information that can be used with a known navigation system, such as map information including road information and facility information and service information including telephone numbers and zip codes. Numeral 32 denotes a read section for reading information from the ROM disk 31 under the control of the CPU 71. Numeral 33 denotes RAM for temporarily storing information readby the read section 32. The RAM 33 also includes a video storage section for storing a map image signal sent to the selector 22; when it functions as a part of the navigation system, a map image based on the map image signal is displayed on the display 21.

Further, the ROM disk 31 records as road information concerning roads, known shape information indicating the shapes of the roads defined by link information and node information and known type information indicating the types of roads classified according to the types of roads such as narrow street, prefectural road, and national road in the format corresponding to the link information. Further, the road information includes shape information and type information defining a multilevel parking lot and an underground parking lot; areas into and from which a vehicle goes and exits are defined.

Numeral 41 denotes a positioning section for measuring the current position of the vehicle. Numeral 42 denotes a GPS section. The GPS section 42 is a known GPS section comprising a GPS antenna for acquiring a signal from a GPS satellite, a demodulator for demodulating the acquired signal, a computing unit for computing the demodulated data to find latitude information, longitude information, and height information, and the like, and outputs the absolute position of the vehicle consisting of the latitude information, the longitude information, and the height information to the positioning section 41.

Numeral 43 denotes a gyro for detecting the rotation angle on the horizontal plane of the vehicle and outputting relative angle information of the vehicle based on the rotation angle to the positioning section 41. Numeral 44 denotes a speed sensor for detecting speed pulses used, for example, to drive a speed meter in the vehicle and control anABS (anti-lock brake system) , and outputting the speed pulses to the positioning section 41. The positioning section 41 calculates relative position information to the reference position of the vehicle based on the relative angle information from the gyro 43 and the speed pulses from the speed sensor 44.

The positioning section 41 measures the current vehicle position (the current position of the vehicle) from the relative position information and the absolute position information acquired from the GPS section 42. Such a positioning method generally is called hybrid positioning method and is a known positioning method.

Numeral 51 denotes a speed detection section for detecting the period of the speed pulse detected by the speed sensor 44 and calculating the speed of the vehicle.

Numeral 61 denotes an operation section for receiving user' s operation; the operation section 61 is made up of a remote control, a touch panel, voice input means, etc.

Numeral 71 denotes the above-mentioned CPU for receiving input of signals and information from the sections and controlling the operation of the sections.

Numeral 81 denotes a tuner; it is a known tuner comprising a TV tuner and a radio tuner.

The operation of the image pickup apparatus comprising the means will be discussed based on a flowchart of FIG. 3.

To begin with, the control process for making a transition from a state in which neither an image of the left camera 11 nor an image of the right camera 12 is displayed on the display 21 (for example, a state in which a map is displayed) to a state in which the image are displayed will be discussed.

As the state in which neither an image of the left camera 11 nor an image of the right camera 12 is displayed on the display 21, a state in which the CPU 71 controls the selector 22 for supplying and displaying a map image from the RAM 33 to and on the display 21 can be taken as an example; it corresponds to the case of functioning as the navigation system, etc. In this state, at step S1, the CPU 71 determines that a camera image is not selected (No at step S1) and goes to step S2.

Step S2 is a step for determining the state of the vehicle based on the speed information of the vehicle. The CPU 71, which acquires the speed information of the vehicle from the speed detection section 51, determines whether or not the traveling speed of the vehicle at the point in time is predetermined speed or less at step S2.

That is, the CPU 71 determines whether or not the state is "slow speed" state as an example of the vehicle state based on the traveling speed of the vehicle. To determine whether or not the state is "slow speed" state, the predetermined speed used as the reference speed is previously defined and if the traveling speed of the vehicle calculated by the speed detection section 51 is the predetermined speed or less (Yes at step S2), the CPU 71 determines that the state of the vehicle is "slow speed" and goes to step S3; if the traveling speed of the vehicle is more than the predetermined speed (No at step S2), the CPU 71 determines that the state of the vehicle is not "slow speed" and repeats processing starting at step S1.

Step 3 is a step for determining whether or not the type of road where the vehicle is positioned is a narrow street from the current vehicle positionmeasuredby the positioning section 41 and the road type information read from the ROM disk 31. That is, it is a step for determining the type of road where the vehicle is positioned based on the current vehicle position and the road information concerning the road.

If the vehicle is positioned on a narrow street (Yes at step S3), the CPU 71 goes to step S4 and determines whether or not the vehicle is positioned within a predetermined distance to an intersection, namely, whether or not the vehicle is about to enter the intersection from the current position of the vehicle measured by the positioning section 41 and the road shape information read from the ROM disk 31.

If the vehicle is positioned within the predetermined distance to the intersection (Yes at step S4), the CPU 71 goes to step S5 and starts image pickup of either of the left camera 11 and the right camera 12 and controls the selector 22 for selecting an image signal from either of the left camera 11 and the right camera 12, whereby the circumstances outside the vehicle are displayed on the display 21.

The image pickup start timing of each camera depends on the value of the predetermined distance. That is, assuming that the predetermined distance is 100 m, for example, image pickup of the camera is started 100 m before the vehicle runs toward the intersection, and the circumstances outside the vehicle as an object are displayed on the display 21. Assuming that the predetermined distance is 10 m, displaying the circumstances outside the vehicle is started 10 m before the intersection. The value of the predetermined distance may be previously defined by the manufacturer of the image pickup apparatus or may be able to be selected by the user.

Thus, as it is determined that the state of the vehicle is "slow speed," that the vehicle is positioned on a narrow street, and that the vehicle is positioned within the predetermined distance to an intersection, the circumstances outside the vehicle are displayed on the display 21.

Thus, when the vehicle is in the "slow speed" state and is about to enter the intersection on the narrow street, automatically the circumstances outside the vehicle are displayed on the display 21, eliminating the need for the user to perform burdensome work.

A modification of control for automatically switching into a camera image described above is as follows:

A step of "is connection road at intersection narrow street?" is inserted between steps S4 and S5. That is, it is a step for determining whether the intersection that the vehicle is about to enter is an intersection with a narrow street or an intersection with a principal street wider than a narrow street, such as a prefectural road or a national road. Accordingly, whether the vehicle is about to enter a small intersection of narrow streets or is about to merge with or cross a principal street can be determined.

The relationship between the determination result at the additional step and the transition to step S5 is determined appropriately, whereby the condition for switching into a camera image can be determined. That is, if it is determined that if Yes is returned from the additional step "is connection road at intersection narrow street?," the transition to step S5 is made, it is made possible to switch into a camera image if the vehicle is about to enter a small intersection of narrow streets . On the other hand, if it is determined that if No is returned from the additional step "is connection road at intersection narrow street?," it is made possible to switch into a camera image if the vehicle is about to merge with or cross a principal street from a narrow street. Such a determination may be previously defined by the manufacturer of the image pickup apparatus or may be able to be selected by the user.

As another modification, if step S5 is a step of "select camera image in response to traveling direction of vehicle," the image of the object provided by either or both of the left camera 11 and the right camera 12 can be checked on the display 21. That is, if the vehicle is about to make a left turn at an intersection, the CPU 71 can control the selector 22 for selecting the image signal from the left camera 11 to display the object image on the whole display 21; if the vehicle is about to make a right turn at an intersection, the CPU 71 can control the selector 22 for selecting the image signal from the right camera 12 to display the object image on the whole display 21; and if the vehicle is about to travel in a straight line at an intersection, the CPU 71 can control the selector 22 for selecting the image signals from both the left camera 11 and the right camera 12 to display the object image from the left camera 11 on the left half of the display 21 and the object image from the right camera 12 on the right half of the display 21.

Next, the control process for making a transition from a state in which an image from either of the left camera 11 and the right camera 12 is displayed on the display 21 to a state in which the image is not displayed will be discussed. This is a state in which the display is restored to map display, etc., for example.

At step S1, the CPU 71 determines whether or not a camera image is selected as the selector 22 is controlled. If the CPU 71 determines that a camera image is selected (Yes at step S1), it goes to step S6.

At Step 6, the CPU 71 determines whether or not the type of road where the vehicle is positioned is a narrow street from the current position of the vehicle measured by the positioning section 41 and the road type information read from the ROM disk 31. It is a step for determining the type of road where the vehicle is positioned based on the current position of the vehicle and the road information concerning the road.

If the CPU 71 determines that the vehicle is positioned on a narrow street (Yes at step S6), the CPU 71 goes to step S7 and determines whether or not the vehicle is positioned within a predetermined distance to an intersection, namely, whether or not the vehicle is going away from the intersection from the current position of the vehicle measured by the positioning section 41 and the road shape information read from the ROM disk 31.

If the vehicle passes through the intersection, the CPU 71 determines that the vehicle is positioned within the predetermined distance to the intersection (Yes at step S6), in which case the CPU 71 returns. Accordingly, selection of the camera image is continued and the circumstances outside the vehicle are continuously displayed on the display 21.

On the other hand, if the vehicle has passed through the intersection and is going away from the intersection, the CPU 71 determines that the vehicle is not positioned within the predetermined distance to the intersection (No at step S6), and goes to step S8. If the CPU 71 determines at step S6 that the vehicle is not positioned on a narrow street (No at step S6), for example, when the vehicle starts to run on a principal street, etc., the CPU 71 also goes to step S8.

At step S8, the CPU 71 controls the selector 22 for releasing selection of the image signal from either of the left camera 11 and the right camera 12 and selecting the previous image signal selected just before the camera image was selected to display the image on the display 21.

Thus, as it is determined that the vehicle is not positioned on a narrow street and that the vehicle is not positioned within the predetermined distance to an intersection, the display 21 is switched from the state in which the circumstances outside the vehicle are displayed to the previous image. Thus, when the vehicle is going away from the intersection, automatically the display is switched from the image of the circumstances outside the vehicle into a map image, for example, eliminating the need for the user to perform burdensome work.

In the described example, the image pickup apparatus comprises the positioning section 41 for detecting the vehicle position based on the information from the GPS section 42, the gyro 43, and the speed sensor 44, the speed detection section 51 for supplying the speed information for the CPU 71 to detect the state of the vehicle (such as slow speed), and the ROM disk 31 storing the road information concerning roads such as the road type information and the road shape information, wherein an image of an object outside the vehicle is picked up by the left camera 11 and the right camera 12 under the control of the CPU 71 based on the road type information, the road shape information, the vehicle position information, and the vehicle state information, and is supplied through the selector 22 to the display 21, so that the need for the user to perform burdensome work is eliminated.

In the described example, all conditions of the road information, the vehicle position, and the vehicle state are determined and then image pickup start of the camera is controlled, but various changes may be added so that image pickup start of the camera is controlled immediately after the conditions of at least the road information and the vehicle position are determined or that image pickup start of the camera is controlled after the conditions of at least the road information and the vehicle state are determined.

In the described example, approach to and going away from the intersection point of roads such as the intersection point of a narrow street and a principal street as for the intersection havebeendescribed. Asdescribedearlier, the road information includes the shape information and the type information defining a parking lot and using the shape information and the type information, a point where the vehicle enters a road from the parking lot or a point where the vehicle enters the parking lot from a road is contained in the determination object at step S4 in FIG. 3, whereby it is made possible to control so as to select a camera image when the vehicle enters the parking lot or when the vehicle enters a connection road from the parking lot.

The foregoing description of the preferred embodiments of the invention has been presented for purposes of illustration and description. It is not intended to be exhaustive or to limit the invention to the precise form disclosed, and modifications and variations are possible in light of the above teachings or may be acquired from practice of the invention. The embodiments were chosen and described in order to explain the principles of the invention and its practical application to enable one skilled in the art to utilize the invention in various embodiments and with various modifications as are suited to the particular use contemplated. It is intended that the scope of the invention be defined by the claims appended hereto, and their equivalents.

## Claims

1. An image pickup apparatus comprising:
an image pickup adapted to pick up an image of an object outside a vehicle;
a position detector adapted to detect a vehicle position;
an information storage adapted to store road information concerning roads; and
a controller adapted to control said image pickup based on the road information and the vehicle position.

2. An image pickup apparatus comprising:
an image pickup adapted to pick up an image of an object outside a vehicle;
a position detector adapted to detect a vehicle position;
a state detector adapted to detect a vehicle state;
an information storage adapted to store road information concerning roads; and
a controller adapted to control said image pickup based on the road information and the vehicle state.

3. An image pickup apparatus comprising:
an image pickup adapted to pick up an image of an object outside a vehicle;
a position detector adapted to detect a vehicle position;
a state detector adapted to detect a vehicle state;
an information storage adapted to store road information concerning roads; and
a controller adapted to control said image pickup based on the road information, the vehicle position and the vehicle state.

4. The image pickup apparatus as claimed in claim 1 wherein the road information is obtained from said information storage based on the vehicle position.

5. The image pickup apparatus as claimed in claim 4 wherein the road information includes road information concerning a road where the vehicle is positioned and road information concerning a road connected to the road where the vehicle is positioned.

6. The image pickup apparatus as claimed in claim 2 wherein said state detector comprises a speed detection section for detecting traveling speed of the vehicle, and
wherein said controller determines whether or not the vehicle state is a run state based on the speed information from the speed detection section, and controls said image pickup apparatus.

7. An image pickup apparatus control method comprising:
a road information acquisition step of acquiring road information concerning a road where a vehicle is positioned;
a run state information acquisition step of acquiring state information indicating a run state of the vehicle; and
a control step of controlling image pickup based on the road information and the state information from said steps.
